# EUROPEAN PATENT APPLICATION

(11) **EP 4 006 352 A1**
(43) Date of publication of application: **01.06.2022**
(21) Application number: 21203216.3
(22) Date of filing: 18.10.2021
(51) Int. Cl.: F04D 25/08, H02K 1/27, H02K 11/33, H02K 21/16

(54) **FAN ASSEMBLY**

(30) Priority: 26.11.2020 IT 202000028565
(71) Applicant: I.M.E. Industria Motori Elettrici S.P.A., 25025 Manerbio Brescia (IT)
(72) Inventor: RAPI, Giampaolo, I-25025 Manerbio, BRESCIA (IT)
(74) Representative: Gamba, Alessandro

(57) **Abstract**

This invention relates to a fan assembly (1) comprising a blade group (2) commandable in rotation about an axis (X-X), and a motor group (3) extending along the axis (X-X) and supporting said blade group (2).

Specifically, the motor group (3) comprises:
(i) a drive shaft (37) extending along the axis (X-X) rotationally connected with the blade group (2);
(ii) an electric motor (30) comprising a stator (31) and a rotor (32).

Said rotor (32) is operatively connected to the drive shaft (37) and comprises a plurality of rotor poles (321), wherein each rotor pole (321) comprises two magnets (325) respectively mirrored relative to an imaginary plane (P) on which the axis (X-X) lies.

## Description

This invention relates to a fan assembly for an industrial environment. Further, this invention relates to a destratifier fan assembly. In addition, this invention relates to a recessed fan assembly.

This invention is in the field of fan assemblies, i.e., machines suitable for moving air in an environment, such as an industrial environment.

In this description, "industrial environment" refers to environments such as a shed or warehouse or open space generally extending over large areas. Specifically, said industrial environments are inhabitable by both humans and livestock of various types.

In the prior art there are known solutions of fan assemblies suitable for moving the air of the environment in which they are placed to change its state, for example the temperature or the degree of humidity.

In the state of the art, it is necessary for said fan assemblies to be more and more effective and efficient, delivering more and more torque and speed.

At the same time, it is also necessary for the fan assemblies to have as compact dimensions as possible.

In addition, it is also necessary for fan assemblies with the aforesaid features to be at the same time as economical as possible.

It is therefore the object of this invention to provide a fan assembly that fulfills all of the aforesaid requirements by presenting optimized operating features, compact size, and low cost. Specifically, the object of this invention is therefore to have a fan assembly in which there is no need to compromise among the aforesaid requirements.

This object is achieved by means of a fan assembly in accordance with claims 1. The claims dependent on this show preferred variant embodiments involving a number of additional advantageous technical effects.

In addition, further features and advantages of the invention will become clear from the description provided below of its preferred embodiments given as non-limiting examples, in reference to the attached figures, wherein:

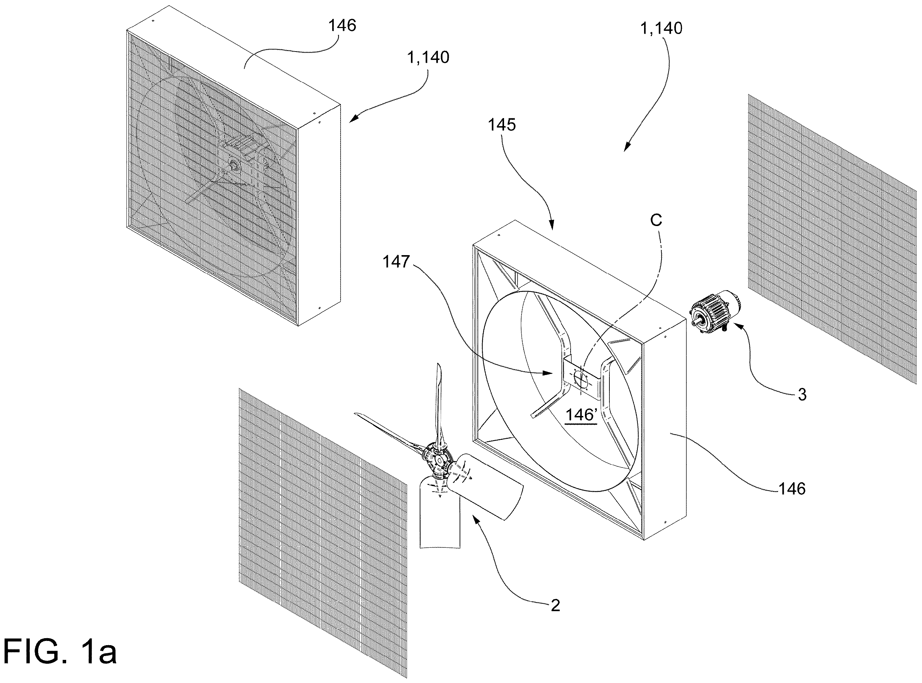

- Fig. 1a and Fig. 1a' show respectively a perspective view and a perspective view in separate parts of a fan assembly according to this invention, according to a first preferred embodiment, wherein said fan assembly is of the destratification type;

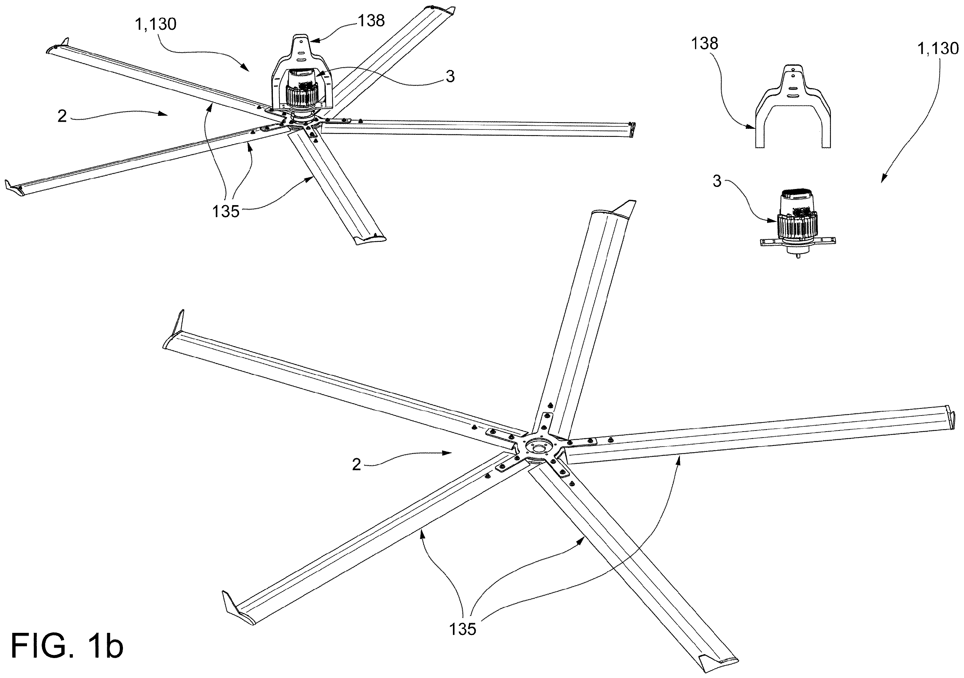

- Fig. 1b and Fig. 1b' illustrate, respectively, a perspective view and a perspective view in separate parts of a fan assembly according to this invention, according to a second preferred embodiment, wherein said fan assembly is of the recessed type;

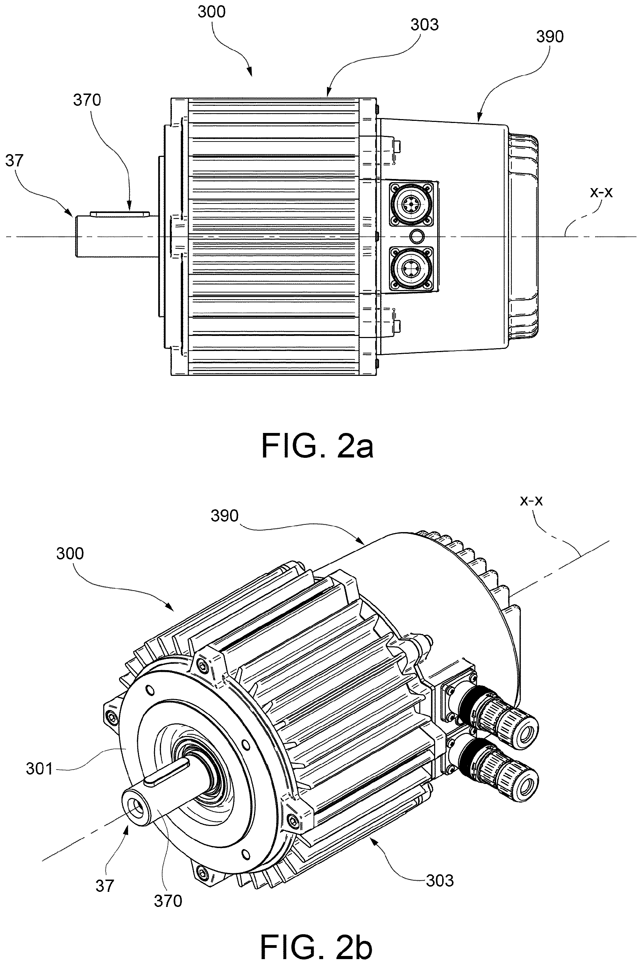

- Fig. 2a and 2b depict a side view and a perspective view, respectively, of a motor group of a fan assembly according to this invention, according to a preferred embodiment;

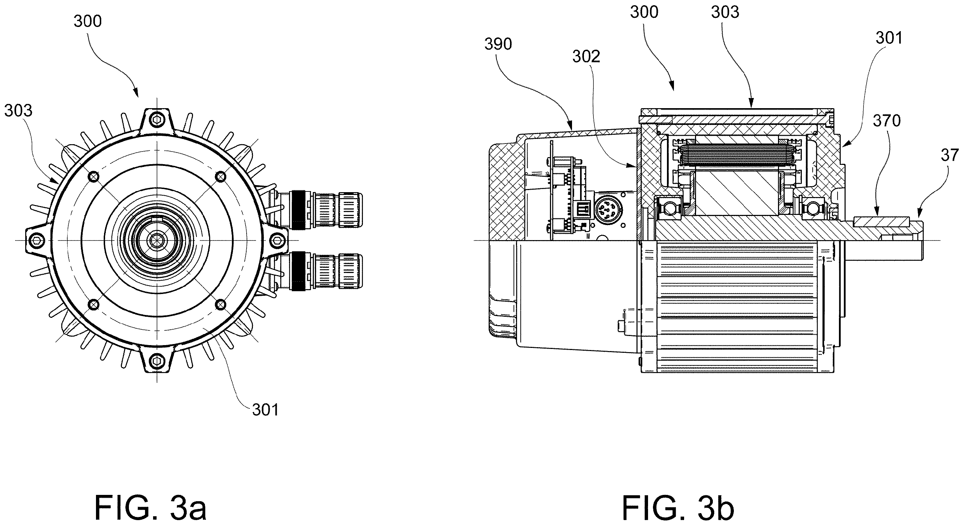

- Fig. 3a and 3b depict two orthogonal views of the motor group of a fan assembly according to this invention, according to a preferred embodiment;

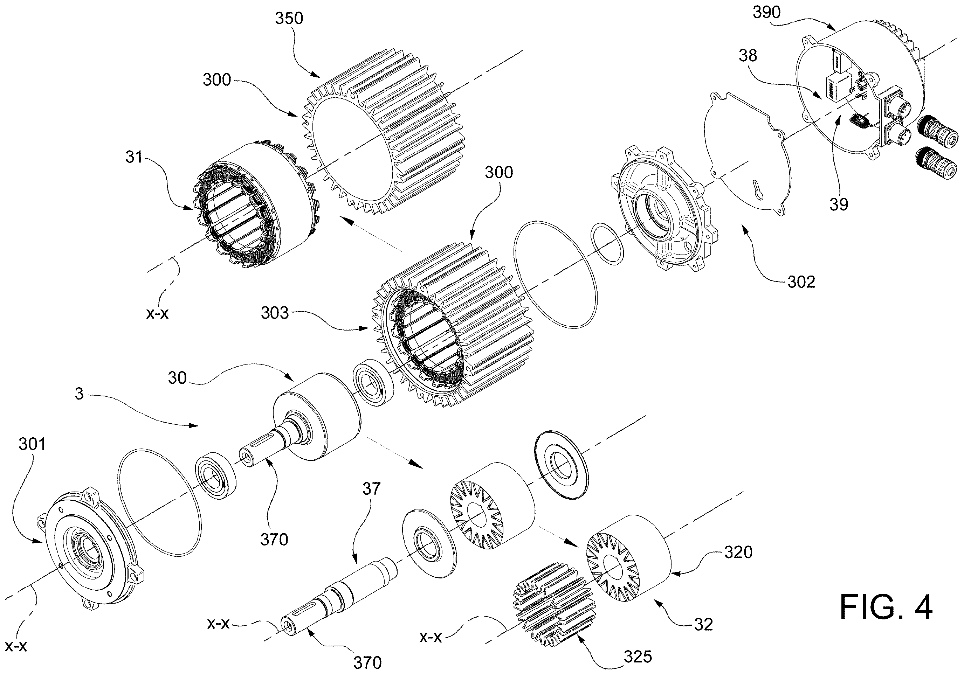

- Fig. 4 shows a perspective view in separate parts of the motor group according to this invention, according to a preferred embodiment;
- Fig. 5a and Fig. 5b respectively show two front views of two components comprised in the motor group of a fan assembly according to this invention, according to a preferred embodiment.

With reference to the attached figures, a fan assembly in its entirety is indicated with the number 1.

According to this invention, the fan assembly 1 comprises a blade group 2, commandable in rotation about an axis X-X, and comprises a motor group 3, suitable for commanding the rotation of said blade group 2 about said axis X-X.

According to this invention, the motor group 3 comprises a drive shaft 37 extending axially along the axis X-X. The drive shaft 37 has a blade end 370 on which the blade group 2 is anchored rotationally. In other words, the rotation of the blade group 2 corresponds to the rotation of the drive shaft 37.

Moreover, according to this invention, the motor group 3 comprises an electric motor 30 comprising a stator 31 and a rotor 32.

In a preferred embodiment, the electric motor 30 is of the sinusoidal brushless type, i.e., brushless.

In one embodiment, the electric motor 30 is of the type belonging to the family of electric motors known as PMSM (Permanent Magnet Synchronous Motor).

According to a preferred form of embodiment, the rotor 32 is operatively connected to the drive shaft 37, for example by geometric coupling or by an axial key. In other words, the rotation of the rotor 32 corresponds to the rotation of the drive shaft 37, and, therefore, to the blade group 2.

Preferably, the stator 31 extends radially and along the axis X-X about the rotor 32, i.e., radially external to said rotor 32. Preferably, the rotor 32 also extends about the axis X-X, thus about the drive shaft 37.

In other words, preferably, the electric motor 30 is of the internal rotor type.

According to a preferred embodiment, the stator 31 comprises a plurality of stator poles 311, wherein each stator pole 311 comprises a slot and a winding, respectively.

In a preferred embodiment, the stator 31 comprises a number of stator poles equal to 15 stator poles 311.

In a preferred embodiment, the stator 31 comprises a number of stator poles equal to 18 stator poles 311.

In a preferred embodiment, the stator 31 comprises a number of stator poles equal to 21 stator poles 311.

According to a further aspect of the invention, the rotor 32 includes a plurality of rotor poles 321.

In a preferred embodiment, the rotor comprises a number of rotor poles 321 between 14 and 20, preferably between 16 and 20.

In a preferred embodiment, the rotor 32 comprises 14 rotor poles 321.

In a preferred embodiment, the rotor 32 comprises 16 rotor poles 321.

In a preferred embodiment, the rotor 32 comprises 20 rotor poles 321.

In a preferred embodiment, the stator is of the FSCW (Fractional Slot Concentrated Wound) type, i.e., the ratio of the number of stator poles to the number of rotor poles per phase is a fractional number.

In a preferred embodiment, said fractional ratio is 0.375.

According to this invention, each rotor pole 321 comprises a pair of magnets 325.

According to this invention, the magnets 325 belonging to the same pair of magnets 325 are respectively mirrored relative to an imaginary plane P on which the axis X-X lies.

In other words, the magnets 325 that are part of the same rotor pole 321 are opposite and symmetrical relative to the imaginary plane P.

Preferably, the magnets 325 are permanent type magnets, i.e., naturally magnetic, which do not need to be electrically excited. In other words, in a preferred embodiment, the electric motor 30 is of the IPM (Internal Permanent Magnet) type.

In a preferred embodiment, the magnets 325 of a rotor pole 321 are positioned such that each magnet 325 has a first end 325' radially proximal to the axis X-X and a second end 325" radially distal to the axis X-X.

Therefore, in a preferred embodiment the magnets 325 extend mainly in a radial direction.

Preferably, the second end 325" is proximal to an outer radial surface 329 of the rotor 32, wherein said outer radial surface 329 radially delimits the size of the rotor 329.

In particular, the second end 325" is spaced apart from said outer radial surface 329, not being a part thereof. In other words, the magnets 325 are not visible from outside the rotor 32.

According to a preferred embodiment, the magnets 325 are respectively inclined at a first angle α relative to the imaginary plane P. In other words, the magnets 325 extend at an angle relative to the radial direction, i.e., they lie in a plane distinct from, and incident to, the imaginary plane P, respectively.

Preferably, said first angle α is between 12.5 and 30 degrees, even more preferably between 18 and 20 degrees.

In a preferred embodiment, the first angle α is equal to 19.3 degrees.

In an embodiment according to this invention, the two magnets 325 that are part of the same pair, i.e., the same rotor pole 321, are inclined in such a way as to form a second angle β with an amplitude equal to twice the first angle α between them.

In other words, said second angle β is between 25 and 60 degrees, even more preferably between 36 and 40 degrees.

In a preferred embodiment, the second angle β is 38.6 degrees.

According to a preferred embodiment, each magnet 325 has a dimension along said radial direction, also referred to as length L, of between 10 and 18 mm, preferably between 13 and 15. Further, in a preferred embodiment, each magnet 325 has a second dimension, also said thickness S, between 1.5 and 3.5 mm, preferably between 2.2 and 2.8 mm.

In a preferred embodiment, each magnet 325 has a length of 14 mm and a thickness of 2.4 mm.

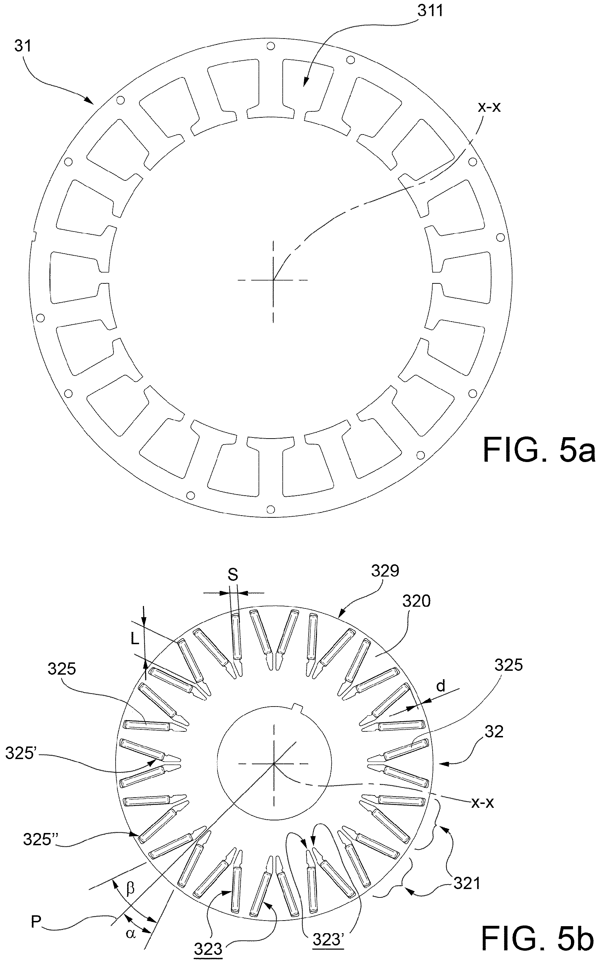

In other words, as seen in Fig. 5a attached by way of example, the length L and thickness S of a magnet 325 are measured on the cross section of said magnet 325.

According to a preferred embodiment, the second end 325" is spaced from the outer radial surface 329 of the rotor 32 by a distance d of between 0.5 and 5 mm.

According to a preferred embodiment, the rotor 32 comprises a rotor body 320, which extends axially and about the axis X-X.

Preferably, the rotor body 320 is obtained by axially superimposed magnetic laminations.

Preferably, the rotor body 320 is made of magnetic material, for example it is low-loss silicon magnetic sheet metal.

Preferably, the magnets 325 have a smaller size, or have about the same size as the rotor body 320 along the axis X-X.

According to a preferred embodiment, the rotor body 320 comprises a plurality of slots 323 specifically shaped to house the magnets 325. In other words, said slots 323 prevent the movement of the magnets 325 during operation of the electric motor 30, for example, they prevent radial movement due to centrifugal forces.

In one embodiment, said slots 323 are passed in an axial direction in the rotor body 320.

In one embodiment, the slots 323 comprise a slot end 323' radially proximal to the axis X-X having a tapered section, suitable for forming a magnetically saturated isthmus.

According to a preferred embodiment, the motor group 3 also comprises a motor housing 350, which comprises a motor casing 300, in which the motor group 3 is housed, and comprises a command casing 390, in which an electronic command device 39 is housed. Specifically, the electronic command device 39 is electrically and operationally connected to and suitable for commanding the electric motor 30.

Preferably, the electronic command device 39 comprises a current inverter element 38, for example an inverter, which commands the stator 31 with alternating current.

Preferably, the motor casing 300 comprises:
- a head plate 301, preferably housing a first sealing element, such as a first toroidal gasket;
- a bottom plate 302, preferably housing a second sealing element, such as a second toroidal gasket;
- a main body 303 at least partially housing the electric motor 30, which sealingly engages the head plate 301 and the bottom plate 302.

Preferably, the head plate 301 and the bottom plate 302 respectively comprise a housing hole and a bearing, e.g., of a rolling bearing type, housed in said housing hole and suitable for supporting the drive shaft 37, allowing it to rotate.

In a preferred embodiment, the motor casing 300 is axially comprised between the blade group 2 and the command casing 390.

According to a preferred variant embodiment, the fan assembly 1 is a destratifier fan 130, i.e., particularly suitable for placing the high air masses contained in large rooms in motion, resulting in their destratification. In particular, the destratifier fan assembly 130 is suitable for moving said high masses of air by performing relatively slow movements, in such a way as to ensure constant air movement in the industrial environment while avoiding air vortices.

According to a preferred embodiment, the blade group 2, of the destratifier fan assembly 130, comprises a plurality of blades 135, specially shaped to move air in an axial direction parallel to the main axis X-X, preferably, in an intake direction.

Additionally, the destratifier fan assembly 130 comprises a ceiling bracket 138 anchorable to a ceiling of a room and to the motor group 3 for supporting this last on said ceiling.

According to a preferred embodiment, the ceiling bracket 138 extends in length such that, in a configuration mounted on the ceiling of a room (the axis X-X is substantially parallel to the walls of the room, orthogonal to the ceiling), the motor group 3 and the blade group 2 are spaced apart from said ceiling.

In a variant embodiment, the fan assembly 1 is of the recessed fan type 140, that is, comprising a recessed frame 145 in which the blade group 2 and the motor group 3 are housed.

In one embodiment, said recessed frame 145 comprises a recess box 146 in which the blade group 2 and motor group 3 are housed, which comprises a through-opening 146' through which the air flows, preferably circular in shape. Said through-opening 146' is centered relative to an opening center C.

Additionally, the recessed frame 145 comprises a support frame 147 housed in the through-opening 146' and supporting the recessed type of fan assembly. Preferably, as is visible in the figures, the axis X-X coincides with the opening center C. In other words, the fan assembly is concentric to the through-opening 146'.

Thus, in other words, all the air passing through the opening 146' is intercepted by the fan assembly, and in particular by the blade group 2, which moves it.

According to a preferred embodiment, said magnets are made from rare earths, such as samarium-cobalt (SmCo), neodymium (NdFeB) alloys, and the like forming part of the permanent magnet family.

In an embodiment not shown in the figures, the motor group 3 also comprises a reducer, operatively connected to the drive shaft 37 between the electric motor 30 and the blade group 2, suitable for modulating the speed delivered by the motor, regulating it to the operating specifications of the blade group 2.

Innovatively, the fan assembly fully fulfills the intended object by overcoming the typical problems of the prior art.

Advantageously, in fact, the technical features of the rotor, such as the geometry of the magnets, the slots containing them and their arrangement are optimized for the operating specifications, such as torque and speed, of a fan assembly.

This implies, for the same performance relative to the known fan assemblies, a reduction in the overall size of the magnets used, resulting in an advantage in cost, an advantage in terms of production of the magnets, a reduction in the overall weight of the electric motor, and also an advantage in environmental terms.

Advantageously, the fan assembly is powered by an electric motor having a higher power-to-weight ratio than brushless permanent magnet motors directly facing the air gap, typically used in fan assemblies of the prior art.

Advantageously, the radial dimensions of the rotor, and thus of the entire electric motor, at the same power output, are reduced relative to that which may be obtained from external-rotor and internal-rotor electric motors with permanent magnets arranged along the rotor surface.

Advantageously, the overall reduction in motor size and dimensions allows an increase in the air passage section, resulting in improved performance of the fan assembly.

Advantageously, arranging the magnets inside the slots obtained internally in the rotor, and therefore not arranging them on the radial surface of the rotor, improves the overall mechanical strength of the rotor, as these magnets are not subject to centrifugal force that could cause them to detach during rotation.

Advantageously, eddy currents, due to currents circulating on the surface of the magnets, are reduced relative to the motors normally used in fans of the prior art, since said magnets are not arranged on the radial surface of the rotor, thus not facing the air gap.

Advantageously, it increases the magnets resistance to demagnetization relative to the motors normally used in fans of the prior art, since these are not arranged on the radial surface of the rotor, thus not facing the air gap.

Advantageously, the need to provide magnet retention systems, also known as "wrapping," is solved, since said magnets are not arranged on the radial surface of the rotor, with real advantages in terms of construction, cost, and weight.

Advantageously, the arrangement of the magnets within the rotor is such that the magnetization takes on a transverse pattern, and such that the magnetic flux is conveyed to the air gap through sectors of soft ferromagnetic material. In addition, the magnetic flux passage surfaces are such that they are progressively reduced in the passage to the air gap.

Advantageously, due to the aforesaid arrangement of the magnets, it is possible to reduce costs while maintaining the air gap induction characteristic of electric motors with surface magnets.

Advantageously, therefore, the electric motor, and in particular the rotor, is equipped with a high number of poles, a feature useful for optimizing the torque-speed curve of the motor, with specific reference to the features of the blade group.

Advantageously, moreover, the electric motor has a concentration of magnetic flux at the air gap, resulting in an increased induction value relative to that which may be obtained in brushless motors with surface magnets typically used in fans of the prior art.

Advantageously, sensorless control is improved due to the presence of saliency.

Advantageously, the electric motor features high electrical efficiency in energy conversion.

Advantageously, the electric motor is suitable for housing rare earth magnets, such as samarium-cobalt (SmCo), neodymium (NdFeB), and similar alloys forming part of the permanent magnet family.

It is clear that a person skilled in the art may make changes to the invention described above in order to meet contingent needs, all falling within the scope of protection as defined in the following claims.

## Claims

1. A fan assembly (1) comprising:
- a blade group (2) commandable in rotation about an axis (X-X);
- a motor group (3) which extends along the axis (X-X) being operatively connected to said blade group (2), comprising:
i) a drive shaft (37) which extends along the axis (X-X) having a blade end (370) to which the blade group (2) is rotationally connected;
ii) an electric motor (30) comprising a stator (31) and a rotor (32) operatively connected to the drive shaft (37); wherein the rotor (32) comprises a plurality of rotor poles (321), wherein each rotor pole (321) comprises two magnets (325) respectively mirrored relative to an imaginary plane (P) on which the axis (X-X) lies.

2. Fan assembly (1) according to claim 1, wherein the magnets (325) of a rotor pole (321) are positioned so that each magnet (325) has a first end (325') radially proximal to the axis (X-X) and a second end (325") radially distal relative to the axis (X-X).

3. Fan assembly (1) according to claim 2, wherein each magnet (325) is inclined relative to the imaginary plane (P) respectively by an inclination angle (α) between 12.5 and 30 degrees, preferably between 18 and 20 degrees.

4. Fan assembly (1) according to any of the preceding claims, wherein each magnet (325) has a length (L) comprised between 10 and 18 mm, preferably between 13 and 15 mm, and has a thickness (S) comprised between 1.5 and 3.5 mm, preferably comprised between 2.2 and 2.8 mm.

5. Fan assembly (1) according to any of the preceding claims, wherein the rotor (32) comprises a rotor body (320), in which appropriately shaped slots (323) are formed, in which the magnets (325) are housed.

6. Fan assembly (1) according to claim 5, wherein each slot (323) comprises a slot end (323') radially proximal to the axis (X-X) having a tapered section suitable for forming a magnetically saturated isthmus.

7. Fan assembly (1) according to any one of the preceding claims, wherein the number of rotor poles (321) is 14 or 16 or 20.

8. Fan assembly (1) according to any one of the preceding claims, wherein the magnets (325) are made from rare earths, e.g. such as samarium-cobalt (SmCo), neodymium (NdFeB) alloys, and the like forming part of the permanent magnet family.

9. Fan assembly (1) according to any one of the preceding claims, wherein the stator (31) has a number of stator poles (311) equal to 15 or 18 or 21.

10. Fan assembly (1) according to claim 9, wherein the motor group (3) comprises an electronic command device (39) which commands the supply of alternating current to the stator (41).

11. Fan assembly (1) according to claim 10, wherein the motor group (3) comprises a motor body (350) which comprises:
i) a motor casing (300), in which the electric motor (30) is housed; and
ii) a command casing (390), in which the electronic command device (39) is housed;
wherein the motor casing (300) is axially positioned comprised between the blade group (2) and the command casing (390).

12. Fan assembly (1) according to any one of the claims from 1 to 11, wherein the fan assembly (1) is a destratifier fan (130) comprising a ceiling bracket (138) suitable for supporting the motor group (3) to a ceiling of a room.

13. Fan assembly (1) according to any one of the claims from 1 to 11, wherein the fan assembly (1) is of the recessed fan type (140) comprising a recessed frame (145) in which the blade group (2) and the motor group (3) are housed, wherein said recessed frame (145) comprises:
i) a recess box (146) which defines a through-opening (146') centered relative to an opening center (C);
ii) a support frame (147), housed in the through-opening (146'), which supports the fan assembly (1) in a position such that the axis (X-X) lies at the opening center (C).
